# EUROPEAN PATENT SPECIFICATION

(11) **EP 4 187 331 B1**
(45) Date of publication and mention of the grant of the patent: **09.10.2024**
(21) Application number: 21210311.3
(22) Date of filing: 24.11.2021
(51) Int. Cl.: C12C 13/00, G05B 13/02

(54) **METHOD AND DEVICE FOR PROVIDING BEVERAGE MANUFACTURING ANALYSIS**
VERFAHREN UND VORRICHTUNG ZUR BEREITSTELLUNG EINER GETRÄNKEHERSTELLUNGSANALYSE
PROCÉDÉ ET DISPOSITIF POUR LA FOURNITURE D'UNE ANALYSE DE FABRICATION DE BOISSONS

(43) Date of publication of application: 31.05.2023
(73) Proprietor: Heineken Supply Chain B.V., 1017 ZD Amsterdam (NL)
(72) Inventor: DEELEN, Willem Gerrit, 1017 ZD Amsterdam (NL); MAAGD, Michiel Herman, 1017 ZD Amsterdam (NL); BING, Xiaoyun, 1017 ZD Amsterdam (NL); RAMIREZ, Ramon Marin, 1017 ZD Amsterdam (NL); PAVLOVIC, David, 1017 ZD Amsterdam (NL)
(74) Representative: V.O.

(56) References cited:
- US-A1- 2017 029 752
- US-A1- 2018 057 778
- US-A1- 2020 157 478
- ANDERSON HAILEE E ET AL: "A review of the analytical methods used for beer ingredient and finished product analysis and quality control", ANALYTICA CHIMICA ACTA, ELSEVIER, AMSTERDAM, NL, vol. 1085, 1 August 2019 (2019-08-01), pages 1 - 20, XP085818628, ISSN: 0003-2670, [retrieved on 20190801], DOI: 10.1016/J.ACA.2019.07.061

## Description

### TECHNICAL FIELD

The present invention relates to the field of process analysis and control for a beverage manufacturing plant and a brewery for beer in particular.

### BACKGROUND

Manufacturing of beverages and brewing of beer in particular is a complex process, involving many different steps. The process is primarily a chemical and biological process of which the course as well as the result in determined by many factors at each step, each of which may influence an end result. By trial and error, conditions for brewing may be improved, but with many factors that may influence one and the same factor with only very small changes of values of each factor, using trial and error may not be a feasible way to arrive at improved process control parameters.

US 2017/0089752 discloses a fermentation monitoring system that measures the weight of a fermenting product to determine the progress of fermentation. The weight of a fermenting batch may decrease as carbon dioxide is given off, and a continuous or periodic weight measurement may be used as a control input to a fermentation system, which may adjust temperature to control fermentation or detect that fermentation is not progressing as expected. Such a system may be to use a weight scale attached to a fermentation vessel and have a control system capable of adjusting the temperature of the fermenting contents. One implementation may have a scale mounted inside a temperature controlled fermentation cabinet.

US 2018/0057778 discloses a beer making system that is arranged to adjust the beer making process based on the age and provenance of hops to achieve a designed flavour profile. Hops may be analysed and packaged, with the analysis stored for recall by a beer making system. When the hops are used during beer making, compensations may be made to the recipe parameters to compensate for estimated changes in the hops performance. In one use case, hops may be analysed and sealed into single use packages, which may be subsequently used with an automated or semi-automated beer making machine. A database lookup may be performed at beer making to adjust a recipe to increase or decrease time, temperature, or other parameters of a beer making process.

US 2020/0157478 discloses a beer making system that is arranged to modify a beer ingredient/process recipe to adjust sensory characteristics of a desired beer. With a given ingredient list and starting recipe, a performance model of a brewing system may be used to generate an updated recipe when given a set of desired sensory characteristics of a desired beer. A user interface may permit a user to adjust characteristics such as thin/thick mouthfeel, dryness/maltiness, hops bitterness, hops flavour, hops aroma, and other characteristics. An updated recipe may change mashing schedules, boiling schedules, or other programmatically controlled aspects of a brewing system. The performance model may include heuristics as well as performance metrics derived from observing previous brewing sessions on one or multiple devices.

### SUMMARY

It is preferred to provide for acquisition of process parameters values and for providing a relation between these process parameters and quality of an end product. Based on such relation, set point values for process control may be provided to arrive at an end product with improved quality and preferable optimal quality.

The present invention is defined in the appended independent claims to which reference should be made. Advantageous features are set out in the appended dependent claims.

A first aspect provides, a method executable by an electronic process analysis device, of selecting a pre-determined number of at least one of the multitude of process parameters based on determining, for a first product quantity of beer having undergone a first processing step as part of a brewing process, a first relation between a set of process parameters of the first processing step and at least one first product component parameter and/or a second relation between a set of ingredient parameters and at least one first product component parameter. The method comprises at least one of obtaining, from a process data acquisition control system, process data comprising a multitude of process parameter values related to the first processing step of the first product quantity and obtaining, from the process data acquisition control system, ingredient data comprising a multitude of ingredient parameter values related to a multitude of ingredients forming a basis for the first product quantity. The method further comprises identifying at least one product component potentially present in the first product quantity and obtaining at least one first product component parameter value for the first product quantity related to the first component. Based on the multitude of the process parameter values, the multitude of the first ingredient parameter values and the product component parameter value, a first relation score indicative of the first relation between each of multitude of the process parameter values and the first product component parameter value and/or a second relation score indicative of the second relation between each of the multitude of the ingredient parameter values and the first product component parameter value are determined. Lastly, a pre-determined number of at least one of the multitude of process parameters and the multitude of ingredient parameters having relation scores indicating strongest relations with the first product component parameter value is selected.

Quality of a beverage may be determined largely by particular components present - or not - in the beverage and, if present, on the amount of components present in the beverage, either as a whole or in a unit volume or mass of the beverage. Presence of such components may relate to any process parameters, ingredients, other factors or a combination thereof and with the method according to the first aspect, such relation may be determined. And with information on such relations, process parameters and ingredient parameters may be tweaked for a subsequent batch with an aim to arrive at improved component parameter values, which may provide an improved quality of the beverage.

Second, a method as that of the first aspect may allow for improved process initialisation and ramp up as well as auto-calibration of beverage manufacturing lines and beverage manufacturing plants. Rather than characterising a new plant for a known process with machinery that may be different from that of earlier plants - either slightly different or very different - by means of obtaining dimensions of reactor vessels, calibrating sensors and simulations, information on appropriate process parameters may be obtained by running one or more pilot runs and applying the method of the first aspect.

Third, this aspect provides direct and compact feedback to a user of the system employing the first aspect. In this way, the user - for example a process control operator or process supervisor - can focus on the most relevant parameters to tinker with. Alternatively or additionally, no human being is involved and an electronic computing system controls the process based on the most relevant parameters. Therefore, one values of the most relevant parameters are set at or close to an optimum, other parameters may be selected for presentation to the user to allow tweaking of the values of the latter parameters.

A variation of the first aspect comprises at least one of obtaining, from a process data acquisition control system, process data comprising at least one first process parameter value related to the first processing step of a second product quantity and obtaining , from the process data acquisition control system, ingredient data comprising at least one second ingredient parameter value related to the ingredient forming a basis for the second product quantity. In this variation, the determining of the relation score between the at least one of the process parameter value and the ingredient parameter value on one hand and the first product component parameter value on the other hand is also based on the at least one of the second process parameter value and the second ingredient parameter value.

With data from multiple batches, usually with different values for the applicable parameters, relations may be determined more accurately. With more data, analysis may be more fault tolerant. Furthermore, this may allow for determining whether relations between values are linear, quadratic, cubic, exponential, monotonic/non-monotonic, strong/weak, being correlated within particular boundaries or not, other or a combination thereof.

In a further implementation, the brewing process comprises batch processing and the first product quantity comprises at least one batch. In batch processing, quantities of beverages are well separated from one another. This allows for convenient and practical analysis of relations between various parameters on a per-batch analysis.

In yet another implementation, at least one of the first process parameter value has a first process parameter timestamp associate therewith, indicative of a starting point of the first processing step; and the first ingredient parameter value has a first ingredient timestamp associated therewith indicative of a moment in time at which the first ingredient is added to the first product quantity.

Adding an ingredient at a specific moment during the process, changing temperature settings at a particular moment or an actual change of that temperature at a particular moment may be relevant to the end result. By taking into account timing data while registering data and when determining relations, the determining of the relations may be done in a more accurate way and the timing of particular process parameters may be provided at the output of the process.

In again a further implementation, the brewing process is a continuous process, further comprising obtaining a throughput time interval of the first processing step indicative of the first product quantity undergoing the first processing step.

Whereas mixing of a defined quantity of beverage with other quantities of beverage having undergone possibly other processing, a particular quantity of beverage may be identified and followed by monitoring flow rate through conduits and reactors. With such data, a time may be determined when the defined quantity enters a reactor or a particular processing step and when the defined quantity leaves the reactor or the particular processing step.

In yet another implementation, the first process parameter value is one of a control value and a measured value. A control value may be a set point for an actuator to be achieved or expected to be achieved by, for example, controlling the actuator with a particular pressure of a gas, a voltage, a current, other, or a combination thereof. The measured value may then be an actual value within a reactor or other vessel or conduit in which the beverage is provided.

Yet a further implementation further comprises obtaining an objective quality relation between numerical or Boolean quality score parameter data related to at least one product component parameter; and determining, based on the quality relation and a value of the at least one product component parameter, an objective quality score value the first product quantity. As indicated above, quality of a beverage may be determined by components present, such as esters. Additionally or alternatively, quality may be determined by other features of the beverage, like viscosity, colour, bitterness, transparency, translucency, sweetness, acidity, sourness, other, or any combination of two or more of these features. Well noted, such properties may be determined by components present and quantities thereof, but physical properties like viscosity or firmness of foam may be more convenient to register.

Again another implementation comprises obtaining a first quality score value for the first product quantity; obtaining a second quality score value for the second product quantity and, based on the first quality score value, the second quality score value, the at least one first product component parameter value of the first product quantity and at least one second product component parameter value of the second product quantity, determining a quality relation between the first product component parameter and a quality score. This allows for obtaining more and possible improved data and accuracy on the relations.

A further implementation further comprises obtaining a first quality score value for the first product quantity, obtaining a second quality score value for the second product quantity and, based on the first quality score value, the second quality score value, at least one process parameter value of the first product quantity and at least one process parameter value of the second product quantity, determining a quality relation between the process parameter and a quality score. This allows for obtaining more and possible improved data and accuracy on the relations.

Another implementation further comprises obtaining a first quality score value for the first product quantity, obtaining a second quality score value for the second product quantity and, based on the first quality score value, the second quality score value, at least one ingredient parameter value of the first product quantity and at least one ingredient parameter value of the second product quantity, determining a quality relation between the ingredient parameter and a quality score. This allows for obtaining more and possible improved data and accuracy on the relations.

A second aspects provides an electronic process analysis device for selecting a pre-determined number of at least one of the multitude of process parameters based on determining, for a first product quantity of beer having undergone a first processing step as part of a brewing process, a first relation a set of process parameters of the first processing step and at least one product component parameter and/or a set of ingredient parameters and at least one product component parameter. The device comprises an input, an output and a processing unit. The input is arranged to perform at least one of obtaining, from a process data acquisition control system, process data comprising a multitude of first process parameter values related to the first processing step of the first product quantity and obtaining, from the process data acquisition control system, ingredient data comprising a multitude of first ingredient parameter values related to a multitude of ingredients forming a basis for the first product quantity; identifying at least one first product component potentially present in the first product quantity; and obtaining at least one first product component parameter value for the first product quantity related to the first product component.

The processing unit is arranged to determine, based on the multitude of the first process parameter values, the multitude of first ingredient parameter values and the product component parameter value, a first relation score indicative of the first relation between each of the multitude of the process parameter values and the first product component parameter value and/or a second relation score indicative of the second relation between each of the multitude of the ingredient parameter values and the first product component parameter value. The processing unit is further arranged to select a pre-determined number of at least one of the multitude of process parameters and the multitude of ingredient parameters having relation scores indicating strongest relations with the product component parameter value. And the output is arranged to provide data on at least one of the relation or the relation score indicative of a relation.

Another aspect provides a computer program product comprising computer executable code arranged to cause a computer, when the executable code is loaded in a memory connected to an electronic processing unit comprised by the computer for programming the electronic processing unit, to execute the method according to the first aspect or any variation thereof or permutations thereof. A further aspect provides a non-transitory memory having stored therein or thereon such computer program product.

### BRIEF DESCRIPTION OF THE DRAWINGS

The various aspects and variations thereof will be discussed in further detail in conjunction with drawings. In the drawings:
Figure 1: shows a schematic view of at least part of a brewery and a data processing system; and
Figure 2: shows a flowchart.

### DETAILED DESCRIPTION

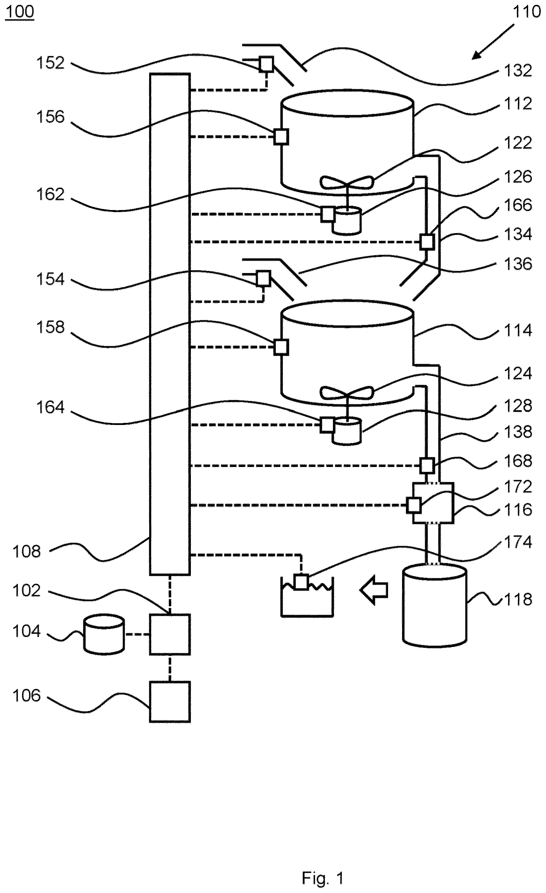

Figure 1 shows a system 100 for manufacturing of a beverage and for monitoring of the process. In this particular case, the process is brewing beer. Part of the system is a brewery 110. For the sake of clarity, only a part of the brewing equipment is depicted. Figure 1 show a mashing tank 112, a boiling tank 114 and a cooler 116. For the sake of clarity, a fermentation tank, a bright tank and a filter have been omitted. And the skilled person will realise that also other steps may be added to the brewing line. Downstream of the cooler, a repository 118 is shown. The repository 118 may be an intermediate storage prior to fermentation, it may be a fermentation tank, another type of container or a combination thereof.

With the mashing tank 112, a first ingredient supply line 132 is provided, via the first ingredient supply line 132, water and malt is provided to the mashing tank 112. The water and malt may be provided through one and the same conduit; in other implementations, the first ingredient supply line 132 comprises multiple conduits, for example one for each type of ingredient. The mashing tank 112 is provided with a first rudder 122 as a process actuator, driven by a first electromotor 126. Further process actuators may be provided, like a heater, another mechanical agitator, other, or a combination thereof.

The mashing tank 112 is connected to the boiling tank 114 via a first brewing conduit 134, debouching in the boiling tank 114. The connection between the mashing tank and the first brewing conduit 134 may be controlled by means of a valve. As such, wort may be transferred in a batch fashion or in a continuous fashion from the mashing tank 112 to the boiling tank 114.

With the boiling tank 114, a second ingredient supply line 138 is provided. In this implementation, the second ingredient supply line 138 is arranged to provide hops to the boing tank 114 and, optionally, further ingredients like spices, herbs, citrus peel, other, or a combination thereof. The boiling tank may be provided with a second rudder 124, driven by a second electromotor 128. Also for the boiling tank 114, further process actuators may be provided, like a heater, another mechanical agitator, other, or a combination thereof.

The boiling tank 114 is connected to the cooler 116 via a second brewing conduit 138, debouching in the cooler 116. The connection between the boiling tank and the second brewing conduit 138 may be controlled by means of a valve. As such, wort may be transferred in a batch fashion on in a continuous fashion from the boiling tank 114 to the cooler 116.

The boiled wort preferably passes through the cooler in a continuous way and is provided to the repository 118. From the repository, the rest of the brewing process may be continued, as known by the skilled person.

At the left in Figure 1, a monitoring and control data bus 108 is provided. The data bus 108 is connected to a central processing unit 102 of a monitoring and control system. The data bus 108 is also connected to various sensors and actuator controllers within the brewery 110. The monitoring and control system further comprises a memory 104 as a data storage module and a touchscreen 106 as an input/output module. Instead of a touchscreen, also a separate electronic display screen, a keyboard, a mouse, a tracking ball, a display projector, speakers, other or a combination thereof may be provided for receiving and providing data. Such data may be provided to and/or received from users, other systems or a combination thereof. The central processing unit 102 is arranged to control the functionality of the monitoring and control system and in particular the handling of data. The memory 104 is arranged to store data received and processed by the monitoring and control system and to store data enabling the central processing unit 102 to be programmed and execute any process or part thereof as described below.

A first ingredient sensor module 152 is provided on or in the first ingredient supply line 132. The first ingredient sensor module 152 is arranged to obtain data, comprising values, on at least one of a type of an ingredient, a quality level of an ingredient, an amount of an ingredient, another value of another ingredient parameter, or a combination thereof, for one or more ingredients added to the mashing tank 112. As such, the first sensor module 152 may comprise at least one of optical, magnetic, electrical, mechanical, chemical or other sensor to measure at least one of flow, flow velocity, flow volume, weight, a chemical characteristic, conductivity, temperature, transparency to visible or invisible light, acidity, sugar content, viscosity, colour, other or a combination thereof.

.The first ingredient sensor module 152 may also be arranged to provide a timestamp with any data generated, preferably by means of sensing matter. Data thus obtained is sent to the monitoring and control system via the data bus 108 and preferably stored in the memory 104.

A second ingredient sensor module 154 is provided on or in the second ingredient supply line 136. The second ingredient sensor module 154 is arranged to obtain data on at least one of a type of an ingredient, a quality level of an ingredient, an amount of an ingredient, another value of another ingredient parameter, or a combination thereof, for one or more ingredients added to the boiling tank 114. As such, the second sensor module 154 may comprise at least one of optical, magnetic, electrical, mechanical, chemical or other sensor to measure at least one of flow, flow velocity, flow volume, weight, a chemical characteristic, conductivity, temperature, transparency to visible or invisible light, acidity, sugar content, viscosity, colour, other or a combination thereof.

The second ingredient sensor module 154 may also be arranged to provide a timestamp with any data generated, preferably by means of sensing matter. Data thus obtained is sent to the monitoring and control system via the data bus 108 and preferably stored in the memory 104.

A first process sensor module 156 is provided in conjunction with the mashing tank 112. The first sensor module 156 may comprise at least one of optical, magnetic, electrical, mechanical, chemical or other sensor to measure at least one of flow, flow velocity, flow volume, weight, a chemical characteristic, conductivity, temperature, transparency to visible or invisible light, acidity, sugar content, viscosity, colour, other or a combination thereof. As such the first process sensor module 156 is arranged to obtain various characteristics of the wort in the mashing tank 112.

Furthermore, the first process sensor module 156 may be arranged to obtain data on energy added to the wort by any heating means, a volume of wort available in the mashing tank 112, a control temperature or set point temperature of the heating means, other, or a combination thereof. The first process sensor module 156 may also be arranged to provide a timestamp with any data generated, preferably by means of sensing matter. Data thus obtained is sent to the monitoring and control system via the data bus 108 and preferably stored in the memory 104.

A second process sensor module 158 is provided in conjunction with the boiling tank 114. The second sensor module 158 may comprise at least one of optical, magnetic, electrical, mechanical, chemical or other sensor to measure at least one of flow, flow velocity, flow volume, weight, a chemical characteristic, conductivity, temperature, transparency to visible or invisible light, acidity, sugar content, viscosity, colour, other or a combination thereof. As such the second process sensor module 158 is arranged to obtain various characteristics of the wort in the mashing tank 112.

Furthermore, the second process sensor module 158 may be arranged to obtain data on energy added to the wort by any heating means, a volume of wort available in the boiling tank 114, a control temperature or set point temperature of the heating means, other, or a combination thereof. The second process sensor module 158 may also be arranged to provide a timestamp with any data generated, preferably by means of sensing matter. Data thus obtained is sent to the monitoring and control system via the data bus 108 and preferably stored in the memory 104.

A first actuator sensor module 162 is provided with the first electromotor 126. The first actuator module 162 is arranged to control the first electromotor 126 by providing a particular voltage or current, to control the angular speed, a torque provided, a time period of driving the first rudder 122 with specific parameters, other, or a combination thereof. The first actuator sensor module 162 may also be arranged to sense or otherwise obtain data on at least one of the actual voltage or current provided or the actual angular speed or torque provided by the first electromotor.

The first actuator sensor module 162 may also be arranged to provide a timestamp with any data generated, preferably by means of sensing matter. As indicated, also other actuator may be provided in conjunction with the mashing tank 112. The first actuator sensor module 162 may be arranged to control such actuators and to sense any data relevant to such actuators, like energy added to the wort in the mashing tank 112 by heating means. Data thus obtained is sent to the monitoring and control system via the data bus 108 and preferably stored in the memory 104.

A second actuator sensor module 164 is provided with the second electromotor 128. The second actuator module 164 is arranged to control the second electromotor 128 by providing a particular voltage or current, to control the angular speed, a torque provided, a time period of driving the second rudder 124 with specific parameters, other, or a combination thereof. The second actuator module 164 may also be arranged to sense or otherwise obtain data on at least one of the actual voltage or current provided or the actual angular speed or torque provided by the second electromotor.

The second actuator module 164 may also be arranged to provide a timestamp with any data generated, preferably by means of sensing matter. As indicated, also other actuator may be provided in conjunction with the boiling tank 114. The second actuator module 164 may be arranged to control such actuators and to sense any data relevant to such actuators, like energy added to the wort in the boiling tank 114 by heating means. Data thus obtained is sent to the monitoring and control system via the data bus 108 and preferably stored in the memory 104.

A first conduit sensor module 166 is provided in conjunction with the first brewing conduit 134. The first conduit sensor module 166 may comprise at least one of optical, magnetic, electrical, mechanical, chemical or other sensor to measure at least one of flow, flow velocity, flow volume, weight, a chemical characteristic, conductivity, temperature, transparency to visible or invisible light, acidity, sugar content, viscosity, colour, other or a combination thereof of matter in the first brewing conduit 132. As such, the first conduit sensor module 166 may be arranged to sense at least one of physical and chemical properties of wort transported through the first brewing conduit 134. The first conduit sensor module 166 may also be arranged to provide a timestamp with any data generated, preferably by means of sensing matter. Data thus obtained is sent to the monitoring and control system via the data bus 108 and preferably stored in the memory 104.

A second conduit sensor module 168 is provided in conjunction with the second brewing conduit 136. The second conduit sensor module 168 may comprise at least one of optical, magnetic, electrical, mechanical, chemical or other sensor to measure at least one of flow, flow velocity, flow volume, weight, a chemical characteristic, conductivity, temperature, transparency to visible or invisible light, acidity, sugar content, viscosity, colour, other or a combination thereof of matter in the second brewing conduit 134. As such, the second conduit sensor module 168 may be arranged to sense at least one of physical and chemical properties of wort transported through the second brewing conduit 136. The second conduit sensor module 168 may also be arranged to provide a timestamp with any data generated, preferably by means of sensing matter. Data thus obtained is sent to the monitoring and control system via the data bus 108 and preferably stored in the memory 104.

A cooling sensor module 172 is provided in conjunction with the cooler 116. The cooling sensor module 172 may comprise at least one of optical, magnetic, electrical, mechanical, chemical or other sensor to measure at least one of flow, flow velocity, flow volume, weight, a chemical characteristic, conductivity, temperature, transparency to visible or invisible light, acidity, sugar content, viscosity, colour, other or a combination thereof of matter in the cooler 116. As such, the cooling sensor module 172 may be arranged to sense at least one of physical and chemical properties of wort transported through the cooler 116. The cooling sensor module 172 may also be arranged to control operation of the cooler 116 by controlling flow of coolant, providing a setpoint temperature, a control temperature, other, or a combination thereof. Data thus obtained is sent to the monitoring and control system via the data bus 108 and preferably stored in the memory 104.

A sample sensor module 174 is connected to the data bus 108 for sensing a sample of beer or of wort or another intermediary product of a brewery. The sample sensor module 174 may comprise at least one of optical, magnetic, electrical, mechanical, chemical or other sensor to measure at least one of a chemical characteristic, conductivity, temperature, transparency to visible or invisible light, acidity, sugar content, viscosity, colour, other or a combination thereof of matter of the sample. As such, the sample sensor module 174 may be used to determine one or more substances in the sample, such as at least one of ethanol, methanol, sugars and preferably specific sugar molecules, carbon dioxide, particular esters, other, or a combination thereof, preferably including at least one of a weight ratio and volume ratio of the detected substance in relation to a standard measure of at least one of weight and volume. Data thus obtained is sent to the monitoring and control system via the data bus 108 and preferably stored in the memory 104.

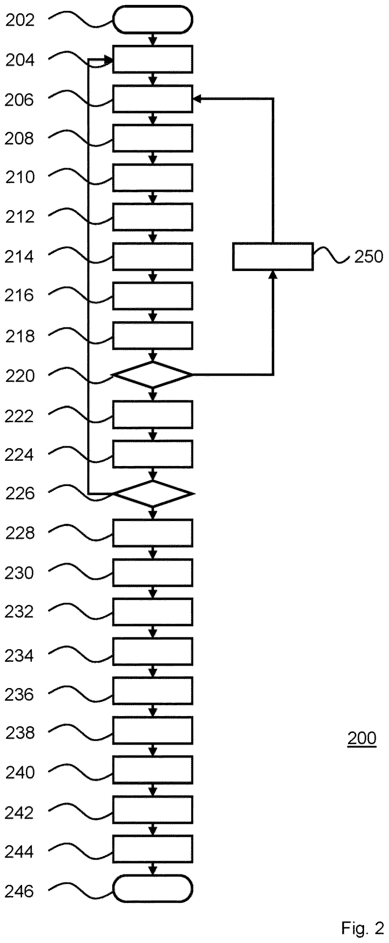

Operation of the monitoring and control system, with the data obtained from the brewery, will be discussed in further detail in conjunction with a flowchart 200 depicted by Figure 2. The various parts of the flowchart 200 may be summarised as follows:
202 start process
204 define quantity to assess
206 commence processing step
208 add ingredients
210 register ingredient parameters
212 run process actuator
214 register actuator parameters
216 sense process parameters
218 register process parameters
220 processing step done?
222 process done?
224 analyse composition
226 register component parameters
228 all quantities done?
230 analyse registered parameters
232 obtain quality parameters
234 relate component parameters to parameters registered during process
236 relate component parameters to quality parameters
238 relate quality parameters to parameters registered during process
240 relate component parameters to actuator parameters
242 determine process control parameters best quality based on relations
244 output determined process control parameters
246 end
250 next step for intermediate product

The procedure starts in a terminator 202 and continues to step 204 in which a quantity of beverage to analyse is defined. The quantity to analyse may be a batch of the beverage, which relates to one and the very same beverage that undergoes a particular processing step by a particular piece of equipment - as a whole. Alternatively or additionally, a quantity of the beverage may be defined as a volume of a continuous or semi-continuous flow of beverage that flows through processing steps while undergoing processing.

A continuous flow quantity may be defined by monitoring flow - flow velocity as flow speed in distance per time unit, mass per time unit, volume per time unit, or a combination thereof - and a start time and an end time per monitoring point. The flow and the progress of central time may be used to determine when the defined quantity arrives at a next processing step - and leaves the next processing step. In the brewery, the identified quantity, with which the brewing process starts, may be a quantity of water.

In 206, the processing step is started for the defined quantity. If the processing is a batch process, the processing is started for the defined quantity. If the processing step is a continuous process, a first part of the identified quantity enters a processing vessel, a processing conduit, another processing entity or a combination thereof.

In step 208, one or more ingredients are added to the identified quantity. For example, malt may be added to the water. In step 210, the ingredients added are sensed by means of the first ingredient sensor module 152 and data is registered, for example in the memory 104. Each ingredient may be registered as a parameter. With the ingredient parameter, several values sensed or otherwise received, via automated or manual input, may be received and thus associated. The values may relate to quality, sugar content, type, other as specified above, other, or a combination thereof.

The associated value or values may be a numerical value - discrete, real, rational or complex - a Boolean value, an alphanumerical value, other, or a combination thereof. Furthermore, a timestamp may be associated with the ingredient parameter at the moment of acquisition of values. Alternatively or additionally, individual timestamps may be associated with individual parameters values. The timestamp may, together with throughput speed of matter through the system, be used to assign values of the parameter to a particular defined quantity, in particular in continuous processing.

In step 212, upon or after start of the applicable processing step, the first rudder 122 is started. In step 214, values of actuator parameters are obtained and registered, for example in the memory 104. Such parameter may be activation of the first rudder 122 and associated values may be a sensed rotational speed in revolutions per time unit like seconds or minutes, an angular speed, a torque, other, or combination thereof. The value may be an actual value, for example obtained by means of a sensor, or a set point, for example a value of an angular speed at which a processing unit controls the first rudder 122. Also other actuator parameters, for example of a heater, may be obtained.

The associated value or values may be a numerical value - discrete, real, rational or complex - a Boolean value, an alphanumerical value, other, or a combination thereof. The Boolean value may for example indicate whether a particular valve is open or closed and an alphanumerical value may relate to a status message or an error message from a machine.

A timestamp may be associated with the actuator parameter at the moment of acquisition of values. Alternatively or additionally, individual timestamps may be associated with individual parameters values. The timestamp may, together with throughput speed of matter through the system, be used to assign values of the parameter to a particular defined quantity, in particular in continuous processing. The values may be registered at a moment a value changes or changes with more than a pre-determined threshold. Alternatively or additionally, the values may be obtained at periodic intervals or continuously.

In step 216, process parameters are sensed, for example by means of the first process sensor module 156. In step 218, values obtained through the sensing of process parameters are registered, for example in the memory 104. A process parameter may be temperature of wort, transparency, conductivity or any other value or combination thereof as discussed above. A process parameter may also be an external parameter, like temperature, humidity, other or a combination thereof in a production hall, outside the production hall, in the open air, other, or a combination thereof.

A timestamp may be associated with the process parameter at the moment of acquisition of values. Alternatively or additionally, individual timestamps may be associated with individual parameters values. The timestamp may, together with throughput speed of matter through the system, be used to assign values of the parameter to a particular defined quantity, in particular in continuous processing. The values may be registered at a moment a value changes or changes with more than a pre-determined threshold. Alternatively or additionally, the values may be obtained at periodic intervals or continuously.

In step 220, it is verified whether the identified quantity has been processed by means of the applicable processing step. If the processing step is a batch process, the processing step may end as an end point has been reached. Such endpoint may be defined as a time interval having lapsed, a temperature value having been reached, another value of a registered value or one or more particular parameters having been reached, other, or a combination thereof. If the processing step is a continuous process the processing step for the identified quantity may be defined as having ended by the full defined quantity has left the applicable reactor in which the processing step takes place or has taken place.

If the processing step has not ended, yet, the process branches back to step 208 to add additional ingredients - or not - and to obtain and register further values of the various parameters. If the processing step has ended as discussed above, the procedure continues to step 222. In step 222, it is checked whether the full process has ended for the defined quantity or not. If the full process has not ended, the procedure branches back to step 206 for a subsequent processing step, via step 250 in which the next processing step is defined for the defined quantity.

If the full process has ended, the procedure continues to step 224, in which the end product of the full process is analysed in step 224. Such analysis may be physical, chemical, biological, other, or a combination thereof. A physical analysis relates to determining physical parameters of the end product, like transparency, colour, conductivity, foam firmness, other, or a combination thereof. A chemical analysis may relate to determining acidity, sugar content, content of particular substances or classes of substances, like esters, acids, other, or a combination thereof, carbon dioxide content, other or a combination thereof. A biological analysis may relate to determining presence of an amount of yeast in general, a particular yeast, other or a combination thereof. Preferably, the composition of the end product is determined, i.e. it is determined what amounts of particular components - substances - are in a unit volume or unit mass of the end product. The result may be stored in the memory 104 in step 226.

In step 230, the registered values of the various parameters are analysed and optionally processed. Such analysis may relate to detection of outliers, comparing to threshold values or threshold bands or interval, other, or a combination thereof. Processing may relate to removing outliers, determining derivative or integral values over time, other values or a combination thereof, steps in values over time, as function over values of another parameter, other, or a combination thereof. Such analysis and processing may yield additional values of analysed parameters or other parameters.

In step 228 is checked whether all identified quantities have been processed and the parameter values of the identified have been obtained and registered. If this is not the case, the procedure branches back to step 204 or, if further quantities have been defined, back to step 206. If all data to be analysed has been obtained from the identified quantities to be assessed, the procedure continues to step 232.

In step 232, quality parameters may be obtained for each quantity. Such quality parameters may be objective parameters, which may relate to physical, chemical or biological parameters. If the firmness of the foam is sufficient, i.e. it holds a particular volume for more than a pre-determined amount of time, the parameter has a first Boolean value and if not, the parameter has a second Boolean value. In the same way, acidity and presence of particular components and amounts thereof per unit or levels of the amount relative to a threshold may constitute objective quality parameters. Instead of a Boolean value, numerical values may be used, for example on a scale from 0 to 9 or from 1 to 10.

Values of relative quality parameters or subjective quality parameters may for example be obtained through test persons, by tasting the end product, smelling the end product or otherwise evaluate the end product using their senses.

Step 232 may also be positioned before step 230, but if beverage matter from all process steps is assess for quality and for subjective quality in particular, once all quantities are available, comparing qualities may be more feasible.

In subsequent steps, relations between various parameters are assess based on values of the parameters. As discussed, multiple values may be associated with a parameters, indicating values of sub-parameters of particular parameters. Such relations may be determined by calculating for example correlation of values of parameters and sub-parameters. The values of sub-parameters may relate to the same parameter or other parameters. The relations between parameters may be determined within one defined quantity - intra-batch - or over multiple defined quantities - inter-batch.

In addition to calculating correlations, also other algorithms may be used for determining relations between parameters and, additionally or alternatively, neural networks or other machine learning algorithms may be employed to determine relationships between the various parameters and parameter sets on the input side and input sides, based on various values of the parameters. In yet another implementation, additionally or alternatively, least square methods may be used to fit parameter relations to a curve, which may be a linear, quadratic, cubic, exponential curve, another curve, or a combination thereof.

More in particular, in step 234, relations between component parameters are related to parameters obtained during the process. The latter parameters may be process parameters, ingredient parameters, other, or a combination thereof. In step 236, relations between component parameters and parameters of which values are obtained during the process are determined. In step 238, relations between quality parameters - objective, subjective, or both - and component parameters are determined. In step 240, relations between component parameters and actuator parameters are determined. also further relations between parameters of which values are obtained may be assessed and determined.

Based on the relations determined and how strong those relations are - for example, a correlation of 0 is a very weak relation and a correlation of 1 or -1 or close to either one of these values is a strong relation -, parameters of which values obtained having the strongest relation to quality parameters are obtained. Such parameters may be the actuator parameters, the process parameters, the ingredient parameters, other, or a combination thereof.

In step 246, the result of the processing - relations, strength of relations, most relevant relations, relations most relevant to quality, either objective, subjective or both, statistical values, other, or a combination thereof - are provided to a user or another system for processing of data. As such, optimal values of ingredient parameters, actuator parameters, process parameters, other parameters or a combination thereof may be determined and provided to a user or a control device. The one or more parameters may be used to automatically optimise the machine setting. Subsequently, the process ends in step 246.

The process may be implemented as an iterative process that, by means of the iterations, may be fine-tuned and optimised by executing the process as described above to further improve and optimise the process and process parameter, either automatically or manually. For the optimisation, known or new algorithms or other technologies may be used, including, but not limited to least square methods, regression, interpolation, extrapolation, use of trained neural networks or other artificial intelligence used for machine learning, other, or a combination of two or more of these technologies.

The process thus far discussed is a brewing process. As discussed above, the mashing, cooking and cooling processes have been discussed in detail and the procedure of flowchart 200 and variations thereof may be applied to these processes. In the same procedure of flowchart 200 and variations thereof may be applied to the fermentation, clearing, carbonisation, filtering and other process steps of the brewing process.

Additionally or alternatively, the procedure and variations thereof may be applied to treatment of waste water, cleaning of the brewery equipment and a bottling process for filling bottles, kegs and cans.

In summary, the above relates to the point that quality of a natural product, like beer, bread, wine and the like, is determined by many parameters. Process parameters that may be changed or not, external parameters and parameters of ingredients. With complex processes and many process steps, it is very difficult to relate parameters to quality - if possible at all. Data on process control, values of product and process related parameters and values that may be interpreted as indicative of quality, substances found in the product - either final or intermediate - and quantities thereof, other parameters or combinations thereof. Between values obtained for the parameters, relations may be determined that may be used for process optimisation. This may be executed for one or more process steps and for one or more parameters in the process and one or more quality parameters.

## Claims

1. A method (200), performed by an electronic process analysis device (102) for selecting a pre-determined number of at least one of the multitude of process parameters based on determining, for a first product quantity of beer having undergone a first processing step as part of a brewing process, a first relation between a set of process parameters of the first processing step and at least one first product component parameter and/or a second relation between a set of ingredient parameters and at least one first product component parameter, the method comprising the steps of identifying (224) the at least one first product component potentially present in the first product quantity; and
obtaining (226) at least one first product component parameter value for the first product quantity related to the first product component;
**characterised in that** the method further comprises:
at least one step of obtaining (214, 216, 218), from a process data acquisition control system, process data comprising a multitude of process parameter values related to the first processing step of the first product quantity and obtaining (210), from the process data acquisition control system, ingredient data comprising a multitude of ingredient parameter values related to a multitude of ingredients forming a basis for the first product quantity; and
based on the multitude of process parameter values, the multitude of ingredient parameter values and the first product component parameter value, a step of determining (234, 240) a first relation score indicative of the first relation between each of the multitude of process parameter values and the first product component parameter value and/or a second relation score indicative of the second relation between each of the multitude of the ingredient parameter values and the first product component parameter value; and
a step of selecting (242) the pre-determined number of at least one of the multitude of process parameters and the multitude of ingredient parameters having relation scores indicating strongest relations with the first product component parameter value.

2. The method (100) of claim 1, further comprising at least one step of obtaining (210, 214, 216, 218) , from a process data acquisition control system, process data comprising at least one second process parameter value related to the first processing step of a second product quantity and obtaining , from the process data acquisition control system, ingredient data comprising at least one second ingredient parameter value related to the ingredient forming a basis for the second product quantity;
wherein the step of determining (234, 240) of the first relation score and/or the second relation score is also based on the at least one of the second process parameter value and the second ingredient parameter value.

3. Method (200) according to any of the preceding claims, wherein the brewing process comprises batch processing and wherein the first product quantity comprises at least one batch.

4. Method (200) according to any of the preceding claims, wherein at least one of:
the first process parameter value has a first process parameter timestamp associate therewith, indicative of a starting point of the first processing step; and
the first ingredient parameter value has a first ingredient timestamp associated therewith indicative of a moment in time at which the first ingredient is added to the first product quantity.

5. Method (200) according to any of the preceding claims, wherein
the brewing process is a continuous process, further comprising a step of obtaining a throughput time interval of the first processing step indicative of the first product quantity undergoing the first processing step.

6. Method (200) according to any of the preceding claims, wherein
the first process parameter value is one of a control value and a measured value.

7. Method (200) according to any of the preceding claims, wherein
the first ingredient parameter value is one of a weight of an amount of the first ingredient, a volume of the first ingredient and a quality of the first ingredient.

8. Method (200) according to any of the preceding claims, further comprising the steps of :
obtaining (236) an objective quality relation between numerical or Boolean quality score parameter data and at least one product component parameter; and
determining, based on the quality relation and a value of the at least one product component parameter, an objective quality score value of the first product quantity.

9. Method (200) according to any of claim 2 to claim 8, further comprising the steps of:
obtaining (232) a first quality score value for the first product quantity;
obtaining (232) a second quality score value for the second product quantity;
based on the first quality score value, the second quality score value, the at least one first product component parameter value of the first product quantity and at least one second product component parameter value of the second product quantity, determining (238) a quality relation between the first product component parameter and a quality score.

10. Method (200) according to any of claim 2 to claim 9, further comprising the steps of :
obtaining (232) a first quality score value for the first product quantity;
obtaining (232) a second quality score value for the second product quantity;
based on the first quality score value, the second quality score value, at least one process parameter value of the first product quantity and at least one process parameter value of the second product quantity, determining (238) a quality relation between the process parameter and a quality score.

11. Method (200) according to any of claim 2 to claim 10, further comprising the steps of :
obtaining (232) a first quality score value for the first product quantity;
obtaining (232) a second quality score value for the second product quantity;
based on the first quality score value, the second quality score value, at least one ingredient parameter value of the first product quantity and at least one ingredient parameter value of the second product quantity, determining (238) a quality relation between the ingredient parameter and a quality score.

12. Method (200) according to any of the preceding claims, wherein
the relation score is indicative of a correlation between parameters between which the relation score is determined.

13. Method (200) according to any of the preceding claims, wherein
the obtained first process parameter value and the obtained first ingredient parameter value are provided to a neural network and the relation score is provided by the neural network.

14. Method (200) according to any of the preceding claims, wherein
the first process parameter value is one of:
Temperature;
Conductivity;
Colour;
Transparency to visible light;
Relative weight;
Acidity;
Sugar content;
Viscosity;
Energy added;
Control temperature of a machine executing the first processing step.

15. Method (200) according to any of the preceding claims, wherein
the first product component parameter is at least one of the following:
ethanol content;
methanol content;
sugar content;
carbon dioxide content;

16. An electronic process analysis device (102) for selecting a pre-determined number of at least one of the multitude of process parameters based on determining, for a first product quantity of beer having undergone a first processing step as part of a brewing process, a relation between at least one of a set of process parameters of the first processing step and a set of ingredient parameters on one hand and at least one first product component parameter on the other hand, the device comprising:
an input arranged to perform:
- identifying at least one first product component potentially present in the first product quantity; and
- obtaining at least one first product component parameter value for the first product quantity related to the first product component; and
**characterised in that**:
the input is further arranged to perform at least one of obtaining, from a process data acquisition control system, process data comprising a multitude of first process parameter values related to the first processing step of the first product quantity and obtaining, from the process data acquisition control system, ingredient data comprising a multitude of ingredient parameter values related to a multitude of ingredients forming a basis for the first product quantity; and
the electronic process analysis device comprises a processing unit (102) arranged to:
determine, based on the multitude of process parameter values, the multitude of ingredient parameter values and the first product component parameter value, a first relation score indicative of the first relation between each of the multitude of process parameter values and the first product component parameter value and/or a second relation score indicative of the second relation between each of the multitude of the ingredient parameter values and the first product component parameter value; and
select a pre-determined number of at least one of the multitude of process parameters and the multitude of ingredient parameters having relation scores indicating strongest relations with the product component parameter value;
the electronic process analysis device further comprising an output arranged to provide data on at least one of the relation or the relation score indicative of a relation.

17. Computer program product comprising computer executable code which when executed by one or more processors of an electronic process analysis device (102) according to claim 16, cause said device (102) to execute the method according to any of claim 1 to 15.

## Patentansprüche

1. Verfahren (200), das von einer elektronischen Prozessanalysevorrichtung (102) durchgeführt wird, um
eine vorbestimmte Anzahl von mindestens einem der Vielzahl von Prozessparametern auszuwählen, basierend auf einem Bestimmen einer ersten Beziehung zwischen einem Satz von Prozessparametern des ersten Verarbeitungsschritt und mindestens einem ersten Produktkomponentenparameter und/oder einer zweiten Beziehung zwischen einem Satz von Inhaltsstoffparametern und mindestens einem ersten Produktkomponentenparameter für eine erste Produktmenge von Bier, das einen ersten Verarbeitungsschritt als Teil eines Brauprozesses durchlaufen hat, wobei das Verfahren die Schritte
des Identifizierens (224) der mindestens einen ersten Produktkomponente, die potenziell in der ersten Produktmenge vorhanden ist; und
des Erhaltens (226) mindestens eines ersten Produktkomponentenparameterwerts für die erste Produktmenge in Bezug auf die erste Produktkomponente umfasst;
**dadurch gekennzeichnet, dass** das Verfahren ferner umfasst:
mindestens einen Schritt des Erhaltens (214, 216, 218) von Prozessdaten von einem Prozessdatenerfassungs-Kontrollsystem, wobei die Prozessdaten eine Vielzahl von Prozessparameterwerten umfassen, die sich auf den ersten Verarbeitungsschritt der ersten Produktmenge beziehen, und Erhalten (210), von dem Prozessdatenerfassungs-Kontrollsystem, von Inhaltsstoffdaten, die eine Vielzahl von Inhaltsstoffparameterwerten umfassen, die sich auf eine Vielzahl von Inhaltsstoffen beziehen, die eine Basis für die erste Produktmenge bilden; und
basierend auf der Vielzahl von Prozessparameterwerten, der Vielzahl von Inhaltsstoffparameterwerten und dem ersten Produktkomponentenparameterwert, einen Schritt des Bestimmens (234, 240) einer ersten Beziehungsbewertung, die die erste Beziehung zwischen jedem der Vielzahl von Prozessparameterwerten und dem ersten Produktkomponentenparameterwert angibt, und/oder einer zweiten Beziehungsbewertung, die die zweite Beziehung zwischen jedem der Vielzahl von Inhaltsstoffparameterwerten und dem ersten Produktkomponentenparameterwert angibt; und
einen Schritt des Auswählens (242) der vorbestimmten Anzahl von mindestens einem der Vielzahl von Prozessparametern und der Vielzahl von Inhaltsstoffparametern mit Beziehungsbewertungen, die die stärksten Beziehungen mit dem ersten Produktkomponentenparameterwert anzeigen.

2. Verfahren (100) nach Anspruch 1, ferner umfassend mindestens einen Schritt aus Erhalten (210, 214, 216, 218), von einem Prozessdatenerfassungs-Kontrollsystem, von Prozessdaten, die mindestens einen zweiten Prozessparameterwert umfassen, der sich auf den ersten Verarbeitungsschritt einer zweiten Produktmenge bezieht, und Erhalten von Inhaltsstoffdaten von dem Prozessdatenerfassungs-Kontrollsystem, die mindestens einen zweiten Inhaltsstoffparameterwert umfassen, der sich auf den Inhaltsstoff bezieht, der eine Grundlage für die zweite Produktmenge bildet;
wobei der Schritt des Bestimmens (234, 240) der ersten Beziehungsbewertung und/oder der zweiten Beziehungsbewertung auch auf mindestens einem vom dem zweiten Prozessparameterwert und dem zweiten Inhaltsstoffparameterwert basiert.

3. Verfahren (200) nach einem der vorhergehenden Ansprüche, wobei der Brauprozess eine Chargenverarbeitung umfasst und wobei die erste Produktmenge mindestens eine Charge umfasst.

4. Verfahren (200) nach einem der vorangehenden Ansprüche, wobei mindestens eines gilt aus Folgendem:
dem ersten Prozessparameterwert ist ein erster Prozessparameter-Zeitstempel zugeordnet, der einen Startpunkt des ersten Verarbeitungsschritts anzeigt; und
der erste Inhaltsstoffparameterwert weist einen damit verbundenen ersten Inhaltsstoff-Zeitstempel auf, der einen Zeitpunkt angibt, zu dem der erste Inhaltsstoff der ersten Produktmenge hinzugefügt wird.

5. Verfahren (200) nach einem der vorhergehenden Ansprüche, wobei der Brauprozess ein kontinuierlicher Prozess ist, der ferner einen Schritt des Erhaltens eines Durchsatzzeitintervalls des ersten
Verarbeitungsschritts umfasst, das die erste Produktmenge angibt, die den ersten Verarbeitungsschritt durchläuft.

6. Verfahren (200) nach einem der vorhergehenden Ansprüche, wobei der erste Prozessparameterwert entweder ein Kontrollwert oder ein Messwert ist.

7. Verfahren (200) nach einem der vorhergehenden Ansprüche, wobei der erste Inhaltsstoffparameterwert einer ist aus dem Gewicht einer Menge des ersten Inhaltsstoffes, dem Volumen des ersten Inhaltsstoffes und der Qualität des ersten Inhaltsstoffes.

8. Verfahren (200) nach einem der vorangehenden Ansprüche, ferner umfassend die Schritte aus:
Erhalten (236) einer objektiven Qualitätsbeziehung zwischen numerischen oder booleschen Qualitätsbewertungsparameterdaten und mindestens einem Produktkomponentenparameter; und
Bestimmen eines objektiven Qualitätsbewertungswertes der ersten Produktmenge basierend auf der Qualitätsbeziehung und eines Wertes des mindestens einen Produktkomponentenparameters.

9. Verfahren (200) nach einem der Ansprüche 2 bis 8, ferner umfassend die folgenden Schritte:
Erhalten (232) eines ersten Qualitätsbewertungswertes für die erste Produktmenge;
Erhalten (232) eines zweiten Qualitätsbewertungswerts für die zweite Produktmenge;
basierend auf dem ersten Qualitätsbewertungswert, dem zweiten Qualitätsbewertungswert, dem mindestens einen ersten Produktkomponentenparameterwert der ersten Produktmenge und dem mindestens einen zweiten Produktkomponentenparameterwert der zweiten Produktmenge, Bestimmen (238) einer Qualitätsbeziehung zwischen dem ersten Produktkomponentenparameter und einer Qualitätsbewertung.

10. Verfahren (200) nach einem der Ansprüche 2 bis 9, das ferner die folgenden Schritte umfasst:
Erhalten (232) eines ersten Qualitätsbewertungswertes für die erste Produktmenge;
Erhalten (232) eines zweiten Qualitätsbewertungswerts für die zweite Produktmenge;
basierend auf dem ersten Qualitätsbewertungswert, dem zweiten Qualitätsbewertungswert, mindestens einem Prozessparameterwert der ersten Produktmenge und mindestens einem Prozessparameterwert der zweiten Produktmenge, Bestimmen (238) einer Qualitätsbeziehung zwischen dem Prozessparameter und einer Qualitätsbewertung.

11. Verfahren (200) nach einem der Ansprüche 2 bis 10, das ferner die folgenden Schritte umfasst:
Erhalten (232) eines ersten Qualitätsbewertungswertes für die erste Produktmenge;
Erhalten (232) eines zweiten Qualitätsbewertungswerts für die zweite Produktmenge;
basierend auf dem ersten Qualitätsbewertungswert, dem zweiten Qualitätsbewertungswert, mindestens einem Inhaltsstoffparameterwert der ersten Produktmenge und mindestens einem Inhaltsstoffparameterwert der zweiten Produktmenge, Bestimmen (238) einer Qualitätsbeziehung zwischen dem Inhaltsstoffparameter und einer Qualitätsbewertung.

12. Verfahren (200) nach einem der vorhergehenden Ansprüche, wobei die Beziehungsbewertung eine Korrelation zwischen Parametern angibt, zwischen denen die Beziehungsbewertung bestimmt wird.

13. Verfahren (200) nach einem der vorhergehenden Ansprüche, wobei der erhaltene erste Prozessparameterwert und der erhaltene erste Inhaltsstoffparameterwert einem neuronalen Netz zugeführt werden und die Beziehungsbewertung von dem neuronalen Netz bereitgestellt wird.

14. Verfahren (200) nach einem der vorhergehenden Ansprüche, wobei der erste Prozessparameterwert einer ist von:
Temperatur;
Leitfähigkeit;
Farbe;
Durchlässigkeit für sichtbares Licht;
relativem Gewicht;
Säuregehalt;
Zuckergehalt;
Viskosität;
hinzugefügter Energie;
Kontrolle der Temperatur einer Maschine, die den ersten Verarbeitungsschritt ausführt.

15. Verfahren (200) nach einem der vorhergehenden Ansprüche, wobei der erste Produktkomponentenparameter mindestens einer ist von:
Ethanolgehalt;
Methanolgehalt;
Zuckergehalt;
Kohlendioxidgehalt;

16. Elektronische Prozessanalysevorrichtung (102) zum Auswählen einer vorbestimmten Anzahl von mindestens einem der Vielzahl von Prozessparametern, basierend auf dem Bestimmen, für eine erste Produktmenge von Bier, das einen ersten Verarbeitungsschritt als Teil eines Brauprozesses durchlaufen hat, einer Beziehung zwischen mindestens einem von einem Satz von Prozessparametern des ersten Verarbeitungsschritts und einem Satz von Inhaltsstoffparametern einerseits und mindestens einem ersten Produktkomponentenparameter andererseits, wobei die Vorrichtung umfasst:
eine Eingabe, die zu Folgendem eingerichtet ist:
- Identifizieren mindestens einer ersten Produktkomponente, die möglicherweise in der ersten Produktmenge vorhanden ist; und
- Erhalten mindestens eines ersten
Produktkomponentenparameterwerts für die erste Produktmenge in Bezug auf die erste Produktkomponente; und
**dadurch gekennzeichnet, dass**
die Eingabe ferner so eingerichtet ist, dass sie mindestens einen von Folgendem durchführt:
Erhalten von Prozessdaten von einem Prozessdatenerfassungs-Kontrollsystem, die eine Vielzahl von ersten Prozessparameterwerten umfassen, die sich auf den ersten Verarbeitungsschritt der ersten Produktmenge beziehen, und Erhalten von Inhaltsstoffdaten von dem Prozessdatenerfassungs-Kontrollsystem, die eine Vielzahl von Inhaltsstoffparameterwerten umfassen, die sich auf eine Vielzahl von Inhaltsstoffen beziehen, die eine Grundlage für die erste Produktmenge bilden; und
die elektronische Prozessanalysevorrichtung eine Verarbeitungseinheit (102) umfasst, die zu Folgendem eingerichtet ist:
Bestimmen, basierend auf der Vielzahl von Prozessparameterwerten, der Vielzahl von Inhaltsstoffparameterwerten und dem ersten Produktkomponentenparameterwert, einer ersten Beziehungsbewertung, die die erste Beziehung zwischen jedem der Vielzahl von Prozessparameterwerten und dem ersten Produktkomponentenparameterwert angibt, und/oder einer zweiten Beziehungsbewertung, die die zweite Beziehung zwischen jedem der Vielzahl von Inhaltsstoffparameterwerten und dem ersten Produktkomponentenparameterwert angibt; und
Auswählen einer vorbestimmten Anzahl von mindestens einem der Vielzahl von Prozessparametern und der Vielzahl von Inhaltsstoffparametern mit Beziehungsbewertungen, die die stärksten Beziehungen mit dem Produktkomponentenparameterwert anzeigen;
wobei die elektronische Prozessanalysevorrichtung ferner eine Ausgabe umfasst, die so eingerichtet ist, dass sie Daten über mindestens eine von der Beziehung oder der Beziehungsbewertung, die eine Beziehung anzeigen, bereitstellt.

17. Computerprogrammprodukt, das einen computerausführbaren Code umfasst, der, wenn er von einem oder mehreren Prozessoren einer elektronischen Prozessanalysevorrichtung (102) nach Anspruch 16 ausgeführt wird, die Vorrichtung (102) veranlasst, das Verfahren nach einem der Ansprüche 1 bis 15 auszuführen.

## Revendications

1. Méthode (200), réalisée par un dispositif d'analyse de traitement électronique (102) pour sélectionner un nombre prédéterminé d'au moins l'un de la multitude de paramètres de traitement sur la base de la détermination, pour une première quantité de produit de bière ayant subi une première étape de traitement dans le cadre d'un traitement de brassage, d'une première relation entre un ensemble de paramètres de traitement de la première étape de traitement et au moins un premier paramètre de composant de produit et/ou une seconde relation entre un ensemble de paramètres d'ingrédients et au moins un premier paramètre de composant de produit, la méthode comprenant les étapes suivantes :
l'identification (224) de l'au moins un premier composant de produit potentiellement présent dans la première quantité de produit ; et
l'obtention (226) d'au moins une première valeur de paramètre de composant de produit pour la première quantité de produit liée au premier composant de produit ;
**caractérisée en ce que** la méthode comprend en outre :
au moins une étape d'obtention (214, 216, 218), à partir d'un système de commande d'acquisition de données de traitement, de données de traitement comprenant une multitude de valeurs de paramètres de traitement liées à la première étape de traitement de la première quantité de produit et d'obtention (210), à partir du système de commande d'acquisition de données de traitement, de données d'ingrédients comprenant une multitude de valeurs de paramètres d'ingrédients liées à une multitude d'ingrédients formant une base pour la première quantité de produit ; et
sur la base de la multitude de valeurs de paramètres de traitement, de la multitude de valeurs de paramètres d'ingrédients et de la première valeur de paramètre de composant de produit, une étape de détermination (234, 240) d'un premier score de relation indicatif de la première relation entre chacune de la multitude de valeurs de paramètres de traitement et la première valeur de paramètre de composant de produit et/ou d'un second score de relation indicatif de la seconde relation entre chacune de la multitude de valeurs de paramètres d'ingrédients et la première valeur de paramètre de composant de produit ; et
une étape de sélection (242) du nombre prédéterminé d'au moins l'un de la multitude de paramètres de traitement et de la multitude de paramètres d'ingrédients présentant des scores de relation indiquant des relations les plus fortes avec la première valeur de paramètre de composant de produit.

2. Méthode (200) selon la revendication 1, comprenant en outre au moins une étape d'obtention (210, 214, 216, 218), à partir d'un système de commande d'acquisition de données de traitement, de données de traitement comprenant au moins une seconde valeur de paramètre de traitement liée à la première étape de traitement d'une seconde quantité de produit et d'obtention, à partir du système de commande d'acquisition de données de traitement, de données d'ingrédients comprenant au moins une seconde valeur de paramètre d'ingrédient liée à l'ingrédient formant une base pour la seconde quantité de produit ;
dans laquelle l'étape de détermination (234, 240) du premier score de relation et/ou du second score de relation est également basée sur l'au moins une parmi la seconde valeur de paramètre de traitement et la seconde valeur de paramètre d'ingrédient.

3. Méthode (200) selon l'une quelconque des revendications précédentes, dans laquelle le procédé de brassage comprend un traitement par lots et dans laquelle la première quantité de produit comprend au moins un lot.

4. Méthode (200) selon l'une quelconque des revendications précédentes, dans laquelle au moins l'une parmi :
la première valeur de paramètre de traitement a un premier horodatage de paramètre de traitement qui lui est associé, indicatif d'un point de départ de la première étape de traitement ; et
la première valeur de paramètre d'ingrédient a un premier horodatage d'ingrédient qui lui est associé, indicatif d'un moment auquel le premier ingrédient est ajouté à la première quantité de produit.

5. Méthode (200) selon l'une quelconque des revendications précédentes, dans laquelle le procédé de brassage est un procédé continu, comprenant en outre une étape d'obtention d'un intervalle de temps de débit de la première étape de traitement indicatif de la première quantité de produit subissant la première étape de traitement.

6. Méthode (200) selon l'une quelconque des revendications précédentes, dans laquelle la première valeur de paramètre de traitement est l'une parmi une valeur de commande et une valeur mesurée.

7. Méthode (200) selon l'une quelconque des revendications précédentes, dans laquelle la première valeur de paramètre d'ingrédient est l'un parmi un poids d'une quantité du premier ingrédient, un volume du premier ingrédient et une qualité du premier ingrédient.

8. Méthode (200) selon l'une quelconque des revendications précédentes, comprenant en outre les étapes suivantes :
l'obtention (236) d'une relation de qualité objective entre des données de paramètres de score de qualité numériques ou booléennes et au moins un paramètre de composant de produit ; et
la détermination, sur la base de la relation de qualité et d'une valeur de l'au moins un paramètre de composant de produit, d'une valeur de score de qualité objective de la première quantité de produit.

9. Méthode (200) selon l'une quelconque des revendications 2 à 8, comprenant en outre les étapes suivantes :
l'obtention (232) d'une première valeur de score de qualité pour la première quantité de produit ;
l'obtention (232) d'une seconde valeur de score de qualité pour la seconde quantité de produit ;
sur la base de la première valeur de score de qualité, la seconde valeur de score de qualité, l'au moins une première valeur de paramètre de composant de produit de la première quantité de produit et l'au moins une seconde valeur de paramètre de composant de produit de la seconde quantité de produit, la détermination (238) d'une relation de qualité entre le premier paramètre de composant de produit et un score de qualité.

10. Méthode (200) selon l'une quelconque des revendications 2 à 9, comprenant en outre les étapes suivantes :
l'obtention (232) d'une première valeur de score de qualité pour la première quantité de produit ;
l'obtention (232) d'une seconde valeur de score de qualité pour la seconde quantité de produit ;
sur la base de la première valeur de score de qualité, de la seconde valeur de score de qualité, d'au moins une valeur de paramètre de traitement de la première quantité de produit et d'au moins une valeur de paramètre de traitement de la seconde quantité de produit, la détermination (238) d'une relation de qualité entre le paramètre de traitement et un score de qualité.

11. Méthode (200) selon l'une quelconque des revendications 2 à 10, comprenant en outre les étapes suivantes :
l'obtention (232) d'une première valeur de score de qualité pour la première quantité de produit ;
l'obtention (232) d'une seconde valeur de score de qualité pour la seconde quantité de produit ;
sur la base de la première valeur de score de qualité, de la seconde valeur de score de qualité, d'au moins une valeur de paramètre d'ingrédient de la première quantité de produit et d'au moins une valeur de paramètre d'ingrédient de la seconde quantité de produit, la détermination (238) d'une relation de qualité entre le paramètre d'ingrédient et un score de qualité.

12. Méthode (200) selon l'une quelconque des revendications précédentes, dans laquelle le score de relation est indicatif d'une corrélation entre des paramètres entre lesquels le score de relation est déterminé.

13. Méthode (200) selon l'une quelconque des revendications précédentes, dans laquelle la première valeur de paramètre de traitement obtenue et la première valeur de paramètre d'ingrédient obtenue sont fournies à un réseau neuronal et le score de relation est fourni par le réseau neuronal.

14. Méthode (200) selon l'une quelconque des revendications précédentes, dans laquelle la première valeur de paramètre de traitement est l'une parmi :
température ;
conductivité ;
couleur ;
transparence à la lumière visible ;
poids relatif ;
acidité ;
teneur en sucre ;
viscosité ;
énergie ajoutée ;
température de commande d'une machine exécutant la première étape de traitement.

15. Méthode (200) selon l'une quelconque des revendications précédentes, dans laquelle le premier paramètre de composant de produit est au moins l'un parmi :
teneur en éthanol ;
teneur en méthanol ;
teneur en sucre ;
teneur en dioxyde de carbone.

16. Dispositif d'analyse de traitement électronique (102) pour sélectionner un nombre prédéterminé d'au moins l'un de la multitude de paramètres de traitement sur la base de la détermination, pour une première quantité de produit de bière ayant subi une première étape de traitement dans le cadre d'un traitement de brassage, d'une relation entre au moins l'un d'un ensemble de paramètres de traitement de la première étape de traitement et d'un ensemble de paramètres d'ingrédient d'une part et au moins un premier paramètre de composant de produit d'autre part, le dispositif comprenant :
une entrée agencée pour réaliser :
- l'identification d'au moins un premier composant de produit potentiellement présent dans la première quantité de produit ; et
- l'obtention d'au moins une première valeur de paramètre de composant de produit pour la première quantité de produit liée au premier composant de produit ; et
**caractérisé en ce que** :
l'entrée est en outre agencée pour réaliser au moins l'une parmi l'obtention, à partir d'un système de commande d'acquisition de données de traitement, de données de traitement comprenant une multitude de premières valeurs de paramètres de traitement liées à la première étape de traitement de la première quantité de produit et l'obtention, à partir du système de commande d'acquisition de données de traitement, de données d'ingrédients comprenant une multitude de valeurs de paramètres d'ingrédients liées à une multitude d'ingrédients formant une base pour la première quantité de produit ; et
le dispositif d'analyse de traitement électronique comprend une unité de traitement (102) agencée pour :
déterminer, sur la base de la multitude de valeurs de paramètres de traitement, la multitude de valeurs de paramètres d'ingrédients et la première valeur de paramètre de composant de produit, un premier score de relation indicatif de la première relation entre chacune de la multitude de valeurs de paramètres de traitement et la première valeur de paramètre de composant de produit et/ou un second score de relation indicatif de la seconde relation entre chacune de la multitude de valeurs de paramètres d'ingrédients et la première valeur de paramètre de composant de produit ; et
sélectionner un nombre prédéterminé d'au moins l'un de la multitude de paramètres de traitement et de la multitude de paramètres d'ingrédients présentant des scores de relation indiquant des relations les plus fortes avec la première valeur de paramètre de composant de produit ;
le dispositif d'analyse de traitement électronique comprenant en outre une sortie agencée pour fournir des données sur au moins l'un de la relation et du score de relation indicatif d'une relation.

17. Produit programme informatique comprenant un code exécutable par ordinateur qui, lorsqu'il est exécuté par un ou plusieurs processeurs d'un dispositif d'analyse de traitement électronique (102) selon la revendication 16, amène ledit dispositif (102) à exécuter la méthode selon l'une quelconque des revendications 1 à 15.
